**Europäisches Patentamt**

**European Patent Office**

**Office européen des brevets**

(11) Publication number: **0 089 194**
**B1**

(12) **EUROPEAN PATENT SPECIFICATION**

(45) Date of publication of patent specification: **18.07.90**

(21) Application number: **83301349.3**

(22) Date of filing: **11.03.83**

(51) Int. Cl.⁵: **G 05 B 19/04**

(54) **Method and apparatus for displaying ladder diagrams.**

(30) Priority: **11.03.82 JP 38570/82**

(43) Date of publication of application:
**21.09.83 Bulletin 83/38**

(45) Publication of the grant of the patent:
**18.07.90 Bulletin 90/29**

(84) Designated Contracting States:
**DE FR GB**

(56) References cited:
**US-A-3 944 984**
**US-A-3 964 026**
**US-A-4 038 533**

**"IBM Technical Disclosure Bulletin" (1978),
pages 836-837**

(73) Proprietor: **FANUC LTD**
**3580, Shibokusa Aza-Komanba Oshino-mura
Minamitsuru-gun Yamanashi 401-05 (JP)**

(72) Inventor: **Komiya, Hidetsugu
1-17-20, Asahigaoka
Hino-shi Tokyo (JP)**
Inventor: **Isobe, Shinichi
Hinodai-Haitsu 516
1-1-1, Hinodai Hino-shi Tokyo (JP)**

(74) Representative: **Billington, Lawrence Emlyn
et al
HASELTINE LAKE & CO Hazlitt House 28
Southampton Buildings Chancery Lane
London WC2A 1AT (GB)**

Courier Press, Leamington Spa, England.

## Description

This invention relates to a method of and apparatus for displaying a ladder diagram. More particularly, the invention relates to a method and apparatus well-suited for displaying ladder diagrams indicative of sequence control performed by a programmable sequence controller.

Numerical control systems permit various mechanical elements in machine tools to be controlled on the basis of commands issued by a numerical control device which incorporates an operator's panel. In such numerical control systems a hardwired switch network or so-called "magnetics" unit comprising a multiplicity of relays is connected between the numerical control device, commonly referred to as an NC device, and the machine tool. Prescribed ones of these relays are actuated in response to the commands issued by the NC device, whereby the prescribed elements of the machine tool are caused to operate in the manner specified by the commands. These commands may be entered directly from the operator's panel, or may be generated in response to programmed M-function and S-function instructions. Disadvantages encountered in the conventional systems of the above type are the large size of the apparatus and the high cost entailed by the large number of relays, as well as poor reliability attributed to mechanical failure of the relays.

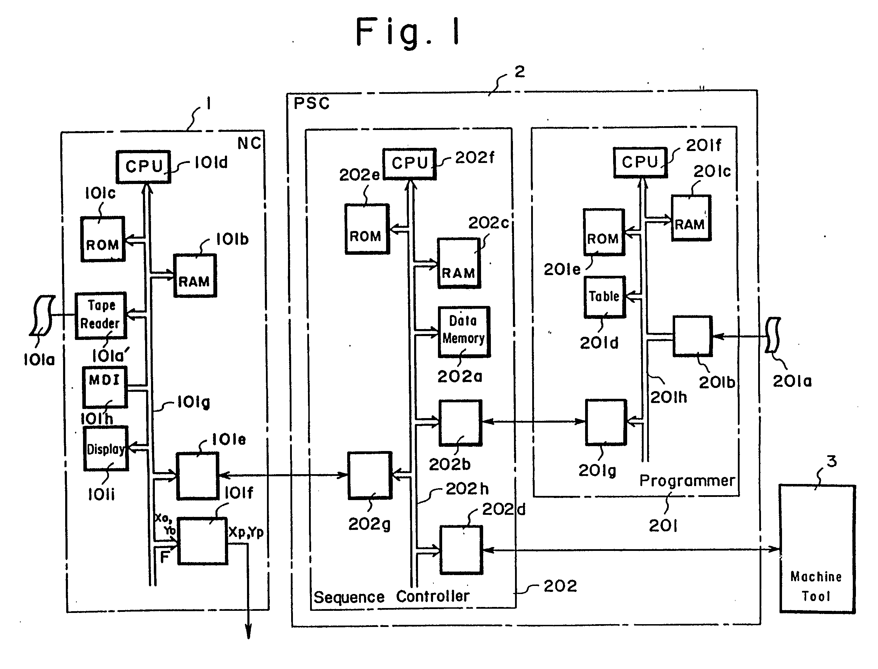

In view of the foregoing disadvantages, sequence controllers, also known as programmable sequence controllers, are now the most widely used means for performing, through program processing, the function of the magnetics unit. A programmable sequence controller (referred to hereinafter as a PSC) according to the prior art is illustrated in Fig. 1. Numeral 1 denotes a numerical control device, 2 the conventional PSC installed separately of the numerical control device 1, and 3 a machine tool. The numerical control device includes a paper tape 101a bearing machinging commands in punched form, a paper tape reader 101a' for reading the paper tape, a random access memory (RAM) 101b for storing the machining commands read in from the paper tape 101a, a read-only memory (ROM) 101c storing a control program for controlling the numerical control device 1, a central processing unit (CPU) 101d for executing processing in accordance with a machining command program or the control program, a transceiver unit 101e, such as a direct memory access controller, for the purpose of sending data to and receiving data from the sequence controller 2, and an arithmetic circuit 101f comprising a so-called pulse distributing circuit which receives as inputs thereto signals indicative of amounts of movement $X_o$, $Y_o$ along the X and Y axes, respectively, and a signal indicative of feed speed F, for producing distributed pulses $X_p$, $Y_p$ by performing a well-known arithmetic pulse distribution operation based on these signal inputs. The numerical control device 1 also includes a manual data input unit (MDI) 101h that is mounted on the operator's panel of the numerical control device 1 for entering single blocks of machining command data when, say, adding to or modifying such data. Also provided is a universal display unit 101i for displaying, e.g., the present position of a tool or the like. Note that the display unit and MDI may be constructed as a single unit. The aforementioned units are interconnected by a bus line 101g.

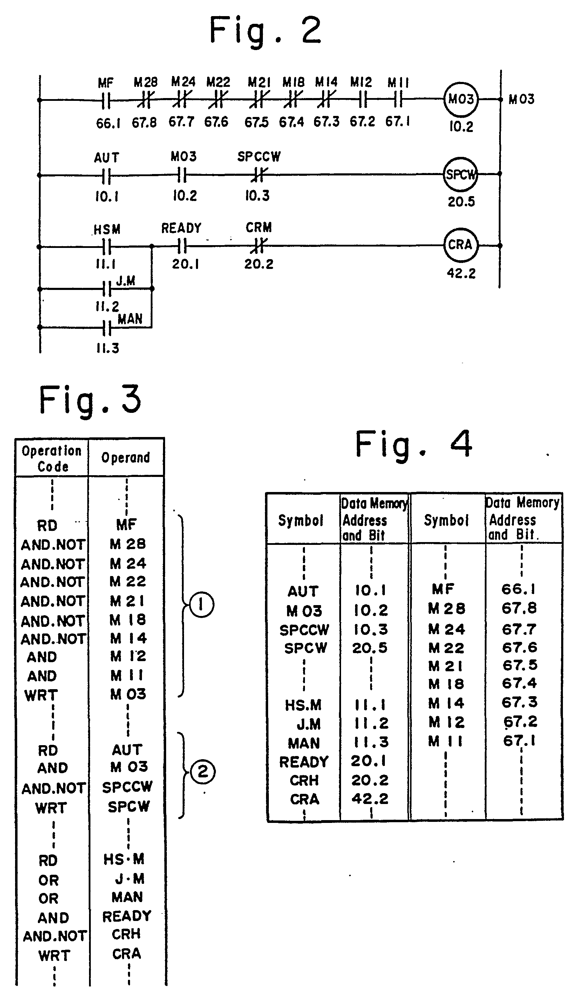

The PSC 2 comprises a programmer 201 for converting an entered sequence program into machine language and for correcting the sequence program, and a sequence controller cabinet 22. The programmer 201 includes a paper tape 201a bearing a correspondence table (described below) and a sequence program in punched form, a paper tape reader 201b for reading the paper tape 201a, and a random access memory (RAM) 201c for storing the sequence program. A sequence program performs the function of a magnetics unit, expressing the function thereof in logical form using operation codes and operands which make up a program. By way of example, a ladder diagram constituting part of the magnetics unit shown in Fig. 2 may be programmed as depicted in Fig. 3. In Fig. 3, the operation codes in the sequence program are given by RD, AND, WRT, OR, AND NOT and so on. RD is a read operation instruction, AND a logical product instruction, WRT a write operation instruction, OR a logical sum instruction, and AND NOT an instruction for logical multiplication with a negated value. Further, MF, M28, . . ., AUT, M03 . . . represent the operands of the sequence program and correspond to prescribed addresses and prescribed bits in a data memory 202a, described below, located within the sequence controller cabinet 202. The PSC 2, based on the group of instructions (1) shown in Fig. 3, executes the following logical operation:

$$MF \cdot \overline{M28} \cdot \overline{M24} \cdot \overline{M22} \cdot \overline{M21} \cdot \overline{M18} \cdot \overline{M14} \cdot M12 \cdot M11$$

and plants the result of the operation (either logical "1" or logical "0") in the data memory 202a at the prescribed bit of the prescribed address corresponding to operand M03. The PSC 2 also executes the following logical operation based on the group of instructions (2):

$$AUT \cdot M03 \cdot \overline{SPCCW}$$

and plants the result of the operation ("1" or "0") in the data memory 202a at the prescribed bit of the prescribed address designated by the operand SPCW.

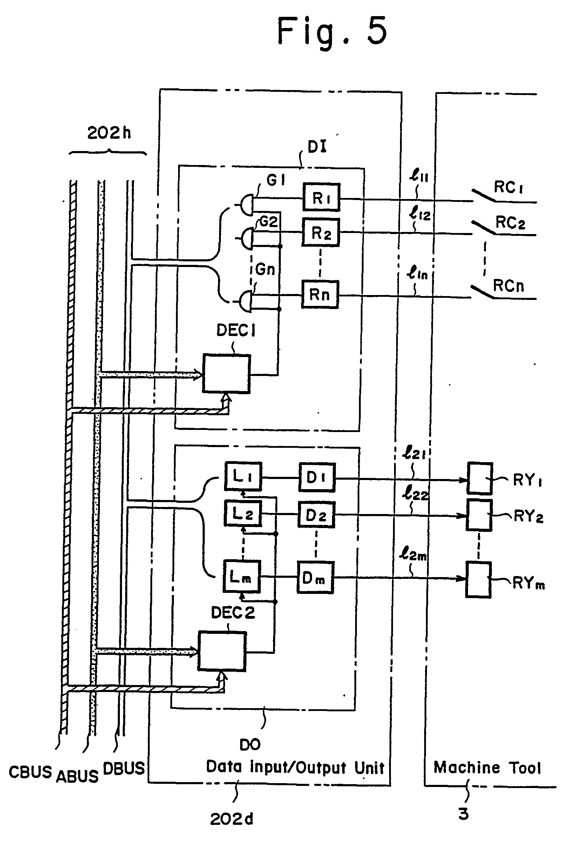

Returning to Fig. 1, the programmer 201 further includes a correspondence table 201d for storing the corresponding relationships between the symbols MF, AUT. . . constituting the operands of the sequence program, and storage locations of the data system 202a. An example of what is stored in the correspondence table is illustrated in Fig. 4. It will be seen that the symbol AUT corresponds to the first bit of the tenth address of the data memory 10, that symbol M03 corresponds to the second bit of the tenth address, and likewise through symbol CRA, which corresponds to the second bit of the 42nd address. The ladder diagram of Fig. 2 also shows the symbols matched with the corresponding storage locations. The programmer 201 is also provided with a read-only memory (ROM) 201e for storing, e.g., a control program for controlling the overall programmer 201, as well as a language translator program for translating the sequence program read in from the paper tape 201a into machine language. The programmer 201 further comprises a central processing unit (CPU) 201f for executing, e.g., translation and correction of the sequence program in accordance with the program stored in the ROM 201e, and a transceiving unit 201 g having a buffer or the like for sending data to and receiving data from the sequence controller cabinet 202. The foregoing units constituting the programmer 201 are interconnected by a bus line 201h.

The sequence controller cabinet 202 includes the data memory 202a mentioned above. The data memory 202a establishes correspondence between each relay of the magnetics unit shown in Fig. 2 and a single bit, the on/off (closed/open) state of a relay being represented by logical "1" or logical "0", respectively, in the corresponding bit. For example, assume that the operator places the system in the automatic mode using the operator's panel. With a magnetics unit, the relay AUT in the power sequence circuit would be placed in the ON state. With the PSC, however, logical "1" is stored in the first bit of the tenth address in data memory 202a. The sequence controller cabinet 202 also includes a transceiving unit 202b having a buffer or the like for supervising the transmission and reception of data with the programmer 201, a RAM 202c for storing the sequence program translated into machine language by the programmer 201, a data input/output unit 202d for supervising the transmission and reception of data with the machine tool 3, a ROM 202e for storing the control program which controls the overall sequence controller cabinet 202, a central processing unit 202f for executing prescribed sequence processing in accordance with the control program and sequence program, and a transceiving unit 202g for sending data to and receiving data from the numerical control device 1. The units constituting the sequence controller cabinet 202 are interconnected by a bus line 202h.

Fig. 5 is a block diagram showing the data input/output unit 202d in greater detail. The data input/output unit 202d comprises a data input circuit DI and a data output circuit DO. The data input circuit DI includes receivers $R_1$ through $R_n$ which receive signals from various limit switches and relay contacts $RC_1$ through $R_n$ delivered from the machine side on cables $I_{11}$ through $I_{1n}$, and gates $G_1$ through $G_n$ receiving the outputs of the respective receivers $R_1$ through $R_n$, and a decoder $DEC_1$ which decodes address signals received from an address bus ABUS to open predetermined ones of the AND gates, the AND gate output being sent out on the data bus DBUS. The data output circuit DO includes flip-flops (or latch circuits if desired) $L_1$ through $L_m$ for storing such signals as forward and reverse spindle rotation signals obtained from the machine tool 3, drivers $D_1$ through $D_m$ provided for corresponding ones of the flip-flops (flip-flop will be abbreviated to FF hereinafter) $L_1$ through $L_m$ for delivering the output signals from the FFs to the machine tool 3 via cables $I_{21}$ through $I_{2m}$ to actuate the relays $Ry_1$ through $Ry_m$, and a decoder $DEC_2$ which decodes address signals received from the address bus ABUS to place predetermined ones of the FFs in a settable or resettable state, and which stores in predetermined FFs the data received from the data bus DBUS. In addition to the buses ABUS and DBUS, a control signal bus CBUS is provided for sending and receiving control signals. The abovementioned cables $I_{11}$ through $I_{11}$ and $I_{2m}$ through $I_{2m}$ interconnect the data input/output unit 202d and the machine tool so that data may be sent and received between them.

The PSC 2 operates in the following manner. First, a table showing the correspondence between symbols and storage locations is prepared while referring to the ladder diagram (Fig. 2) of magnetics circuit, and the table is punched in a paper tape. A sequence program also is prepared in the above-described manner using operation codes and symbols (operands) and is similarly punched into the paper tape 201a. Next, the punched tape 201a is read by the paper tape reader 201b to store the correspondence table in table 201d and the sequence program in the RAM 201c. When the foregoing has been accomplished the PSC 2 starts executing the language processing program stored in the ROM 201e, reads the instructions in the sequence program out of the RAM 201c in successive fashion and converts the operation codes and operands into machine language. The PSC uses the correspondence table to convert each operand into the machine word representing the prescribed address and bit of the data memory 202a. The sequence program converted into these machine words is transferred to and stored in the RAM 202c through the transceiver unit 201g of the programmer 201 and the transceiver unit 202b of the sequence controller cabinet 202. The programmable sequence controller 2 now is capable of executing sequence processing. Henceforth, in accordance with the control program, the CPU 202f reads the sequence program instructions successively out of the RAM 202c one instruction at a time, executes sequence processing from the first to the last instructions of the sequence program and then returns to the first instruction to repeat the cycle. Thus the PSC 2 steps through the sequence program in repetitive fashion.

Now assume that a command such as the command M03 for forward spindle rotation is issued by the numerical control device 101. When this takes place, with reference being had to Fig.

4, logical "1" is written into the data memory 202a in the first bit of the 66th address where the M-function is to be stored, in the first bit of the 67th address where the M-code signal M11 is to be stored, and in the second bit of the 67th address where the M-code signal M12 is to be stored.

Since the central processing 202f is executing sequence processing by repeatedly stepping through the sequence program cyclically and reading out the instructions thereof in consecutive fashion, logical "1" will be stored in the fifth bit of the 20th address of data memory 202a when the groups of instructions (1), (2) in the sequence program (Fig. 3) have been executed. Thereafter, the status (SPCW = "1") of the fifth bith at the 20th address is stored in, say FF $L_l$ of the data output circuit DO (Fig. 5) and delivered to the machine tool 3 through the driver $D_l$ and cable $l_{1l}$. This item of data places the relay $R_l$ of the machine tool 3 in the ON state so that the spindle of the machine tool is rotated in the forward direction. Now assume that, say, the relay contact $RC_l$ on the machine tool side closes (i.e., assumes the ON state) during forward rotation of the spindle, thereby indicating completion of the rotation operation. As a result, a forward rotation end signal (logical "1") from the machine tool side, which signal is produced by closure of the relay contact $RC_l$, is stored in a prescribed bit of the data memory 202a (Fig. 1) through the cable $l_{1l}$, receiver $R_l$, AND gate $G_l$ and data bus DBUS. Sequence programming then continues and the numerical control device 1 is informed of completion of the forward rotation operation. This ends the sequence step for forward rotation of the spindle.

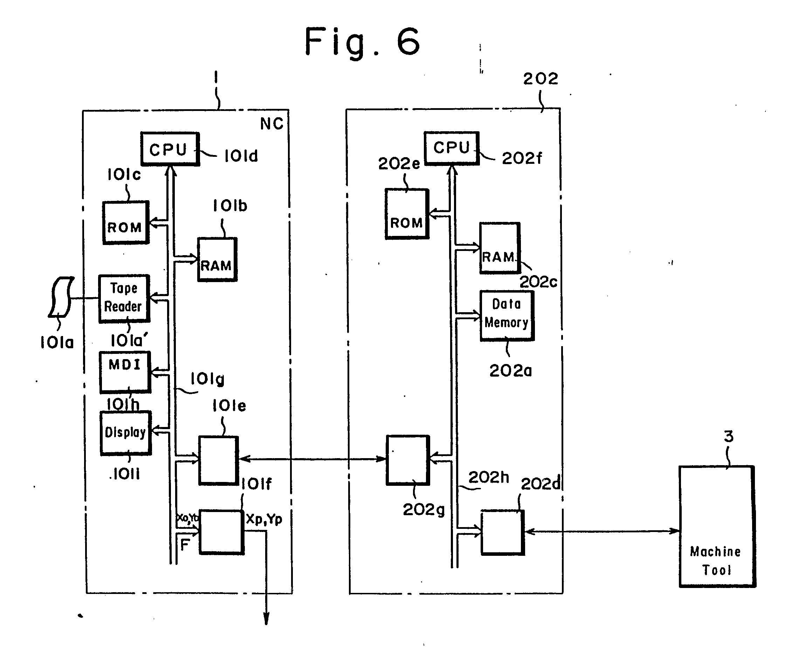

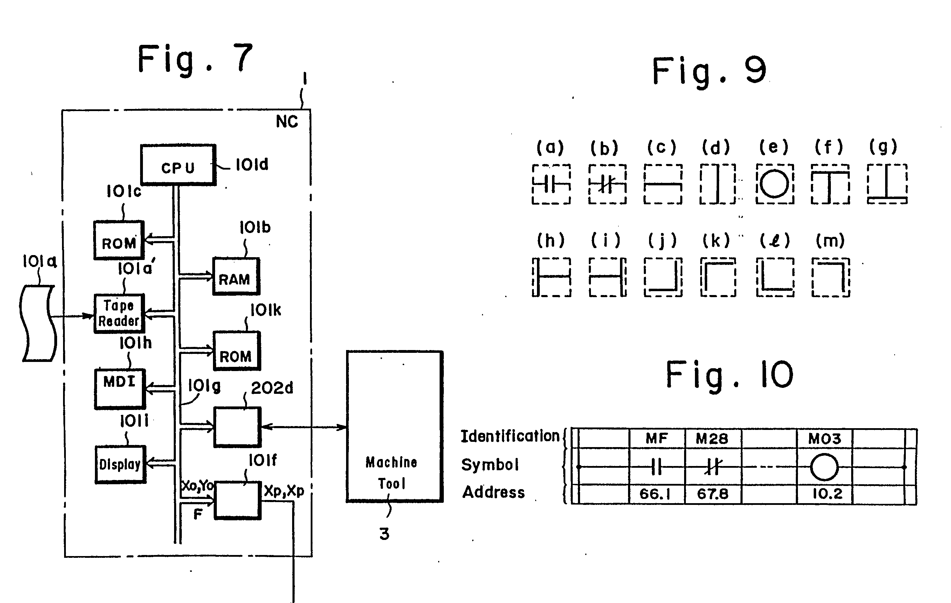

In the case described above the PSC 2 is provided with the programmer 201. An arrangement as shown in Fig. 6 is possible, however, in which the programmer 201 and transceiver unit 202b are deleted, a sequence program already converted into machine language is read in from the numerical control device 1 by reading means (such as the paper tape reader 101a') and is stored in the RAM 202c through the transceiver units 101e and 202g. In place of the RAM 202c, moreover, it is possible to use a ROM for storing a sequence program comprising machine language. Furthermore, while the numerical control device 1 and PSC 2 are shown to be provided separately in Figs. 1 and 6, these can be integrated into a single unit and made to share the same processor, as illustrated in Fig. 7. In Fig. 7, portions similar to those shown in Fig. 1 are designated by like reference characters. Numeral 101k denotes the abovementioned ROM for storing the sequence program expressed in machine language.

The numerical control system having the construction shown in Figs. 1, 6 and 7 is capable of displaying a ladder diagram on the universal display unit 101i in order to facilitate sequence program debugging and maintenance processing. When displaying a ladder diagram in accordance with the prior-art method, however, the diagram segments or "rungs" are displayed sequentially in the order in which the sequence program is written. Accordingly, in order to investigate why, say, a control relay or output relay does or does not turn on (i.e., close) when checking sequence logic during debugging or when a failure has developed, the first task the operator must undertake is to find the pertinent control relay or output relay in the ladder diagram, which generally is many pages long. The operator must then investigate the conditions under which said relay turns on. The latter step, however, similarly entails searching the ladder diagram for the relays involved in turning the abovementioned relay on, the ladder diagram covering a large number of pages as stated above. In other words, debugging or maintenance cannot be carried out with facility in accordance with the prior-art method, where the sequence program is displayed in accordance with the order in which it was orginally written.

US—A—3944984 discloses a method in accordance with the precharacterising part of claim 1.

According to one aspect of the invention there is provided a method of displaying a ladder diagram in a numerical control system having a programmable sequence control function in which sequence processing is executed based on a sequence program to deliver commands from numerical control means to a machine and signals from the machine to the numerical control means, the sequence program being displayed on a display unit in the form of a ladder diagram comprising at least relays, said method being characterised by the steps of:

(a) entering data specifying a predetermined relay, said data being a relay identification symbol or a memory address storing a logical state of said relay,

(b) retrieving a sequence program instruction corresponding to a sequence for turning on the relay specified by said data; and

(c) displaying, in ladder diagram form, a sequence for turning on said relay, based on said sequence program instruction.

According to another aspect of the invention there is provided an apparatus for displaying a ladder diagram in a numerical control system having a programmable sequence control function, operable to execute sequence processing based on a sequence program to deliver commands from numerical control means to a machine and signals from the machine to the numerical control means, the sequence program being displayed on a display unit in the form of a ladder diagram comprising at least relays, said apparatus being characterised by:

(a) input means for entering data specifying a predetermined relay, said data being a relay identification symbol or a memory address storing a logical state of said relay;

(b) retrieval means for retrieving a sequence program instruction corresponding to a sequence for turning on the relay specified by said data; and

(c) display means for displaying, in ladder diagram form, a sequence for turning on said relay, based on said sequence program instruction.

Related subject matter is claimed in the co-pending patents EP—A—89 193 and EP—A—93 312.

An embodiment of the present invention may provide a method and apparatus for displaying a ladder diagram, wherein debugging and maintenance are greatly facilitated.

An embodiment of the present invention may provide a method and apparatus for displaying a ladder diagram, wherein entering the identification of a desired relay or a memory address storing the state of the relay generates a display which shows solely the segment of the ladder diagram indicating the conditions for turning the relay on.

According to one embodiment there may be provided a method and apparatus for displaying a ladder diagram in a numerical control system having a programmable sequence control function in which sequence processing is executed based on a sequence program to deliver commands from a numerical control device to a machine and signals from the machine to the numerical control device. A display unit displays the sequence program in the form of a ladder diagram made up of at least relays. The identification of a relay of interest or the memory address storing the state of the relay is entered, an item of sequence data indicating the conditions which turn the relay on is selected, and a ladder diagram segment indicative of said conditions is displayed on the basis of the sequence data.

Brief Description of the Drawings

Fig. 1 is a block diagram of an example of a programmable sequence controller according to the prior art;

Fig. 2 shows a ladder diagram of the type associated with magnetics circuitry;

Fig. 3 illustrates an example of a sequence program;

Fig. 4 is an explanatory view showing the corresponding relationship between symbols and storage locations in a memory;

Fig. 5 is a block diagram of a data input/output unit included in the programmable sequence controller shown in Fig. 1;

Figs. 6 and 7 are block diagrams illustrating examples of numerical control systems which include a programmable sequence control function;

Fig. 8 is a block diagram of a numerical control system for practicing a ladder diagram display method according to an embodiment of the present invention;

Fig. 9 is an explanatory view of symbolic patterns stored in a character generator included in the system of Fig. 8;

Fig. 10 is an explanatory view showing an example of a display presented on the screen of a CRT included in the system of Fig. 8;

Fig. 11 is a block diagram illustrating a display controller included in the system of Fig. 8; and

Fig. 12 is an explanatory view showing an example of a display presented on the screen of a CRT included in the system of Fig. 8.

In accordance with the present embodiment of the invention, a ladder diagram segment indicating the conditions which turn a relay on is displayed by (1) entering either the identification of a relay such as a control relay or output relay or a memory address storing the state of the relay through use of an input device such as an operator's panel or manual data input device (MDI), (2) selecting the item of sequence data which indicates the conditions for turning the relay on, using the relay identification or memory address, and (3) displaying the ladder diagram segment that is based on the item of sequence data selected.

Reference will now be had to Fig. 8 showing a block diagram of a numerical control system for practicing a method of displaying a ladder diagram according to the present invention. The system includes a numerical control tape 301a bearing machining commands in punched form, a tape reader 301a' for reading in the NC data from the tape 301a, a RAM 301b for storing the NC data read in by the tape reader 301a', a ROM 301c for storing a control program, a ROM 301d for storing a sequence program expressed in machine language, a data memory 301e comprising a RAM for storing the results of numerical control processing and of sequence processing, and a table 301f for storing the corresponding relationships between relay identifications written on a ladder diagram and locations (address and bit position) of the data memory 301e storing the logical state ("1" or "0") of the relays. Also included are a manual data input device (MDI) 301g, a universal display unit 301h, and a data input/output unit 301i for supervising the input and output of data with the machine tool 3. It should be noted that the data input/output unit 301i is structurally similar to the data input/ouput unit 202d shown in Fig. 5. Further provided is a pulse distributor 301j which receives as inputs thereto signals indicative of amounts of movement $X_o$, $Y_o$ along the X and Y axes, respectively, and a signal indicative of feed speed F, for producing pulses $X_p$, $Y_p$ by performing a well-known arithmetic pulse distribution operation based on these signal inputs. All of the foregoing units are under the control of a data processing unit 301m, and all units are interconnected by a bus line 301n.

The universal display unit 301h comprises a display controller DPC, a refresh memory RFM connected to the display controller DPC for storing the sequence program data transferred from the ROM 301d following its conversion into picture information by the display controller DPC, a memory MEM for storing the corresponding relationships transferred from the table 301f, a character generator CG for storing various alphanumeric characters and symbolic patterns illustrative of a ladder diagram, a picture memory IMM for successively storing items of picture data generated by the character generator CG based on the picture information, whereby all picture information for displaying a single frame is stored, and a drive DDV which receives the picture information output of the picture memory IMM for driving a cathode ray tube CRT on the basis of the received information, whereby the CRT will display the stored picture.

As mentioned above, the character generator CG stores not only alphanumeric patterns but also symbols for displaying ladder diagrams. Examples of these symbols are as shown in Fig. 9, in which (a) is a symbol indicating a normally open relay contact, (b) a symbol indicating a normally closed relay contact, and so on through (m). Fig. 10 is an enlarged view of a segment of a ladder diagram when displayed on the screen of the cathode ray tube CRT.

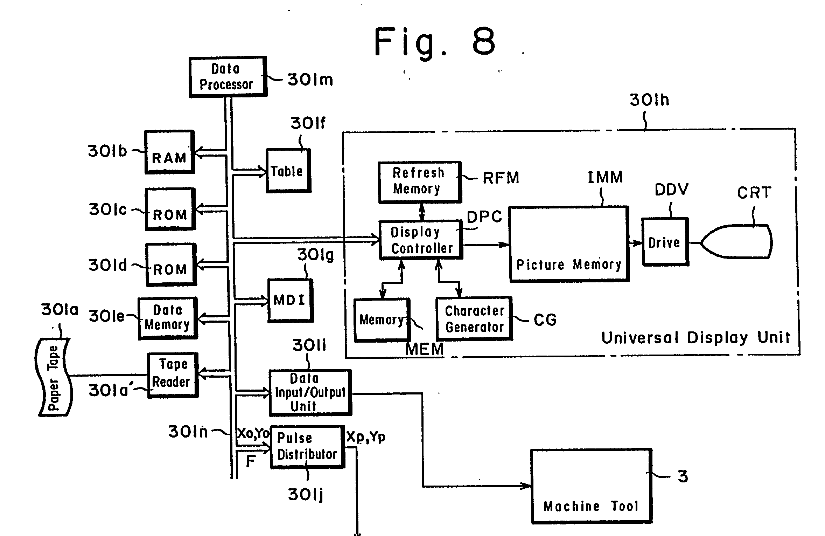

When a request signal for display of a ladder diagram is entered by an input device such as the operator's panel (not shown) or manual input device 301g, the data processing unit 301m transfers the corresponding relationships from table 301f to the memory MEM of universal display unit 301h and then sends the sequence program data from the ROM 301d to the display side in sequential fashion. The unit of data delivered at one time comprises, say, the operation codes RD through WRT, as illustrated in Fig. 3. Upon receiving the sequence program data from the ROM 301d, the display controller DPC edits the data into picture information under the control of an editing program stored within the controller. For example, as shown in Fig. 10, the display controller DPC is adapted to divide one line into an identification display area, a symbolic display area and an address display area and to generate picture information for each display area so that one line of picture information will be made up of the picture information in the three display areas. The corresponding relationships stored in the memory MEM are used in generating the picture information for the identification display area. All picture information created by the display controller DPC is stored in the refresh memory RFM. Thereafter, the display controller DPC reads each item of picture information out of the refresh memory RFM in succession, reads the patterns corresponding to the picture information out of the character generator CG and stores the patterns in the picture memory IMM. Through these operations, ladder diagram segments are displayed sequentially on the CRT in accordance with the order in which the sequence program is written. Described next will be the processing which takes place when an operator wishes to display only the conditions which turn on a desired relay such as a control relay or output relay. In the description, reference will be had to Fig. 11 showing a functional block diagram of the display controller DPC.

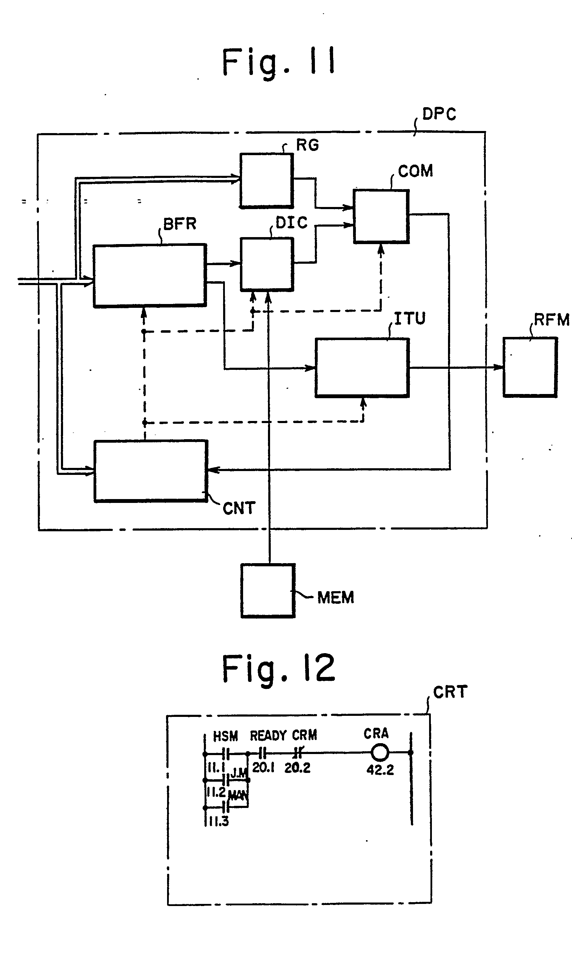

First, the operator goes to an input device such as the operator's panel or the manual data input device 301g and keys in the identification of the desired relay or the memory address at which the state of the desired relay is stored. He also keys in the ON conditions display mode. We shall assume that the operator keys in "CRA" (Fig. 2) for the identification of the desired relay. When signals indicative of the relay identification and ON conditions display mode enter the numerical control system, the data processor 301m delivers these signals to the universal display unit 301h and then sends the display unit the sequence program data starting from the beginning thereof. Within the display controller DPC, the relay identification "CRA" is stored in a register RG (Fig. 11), a controller CNT is placed in the ON conditions display mode, and one unit of the sequence program data, extending from the operation code RD to the operation code WRT, is stored in a buffer register BFR instruction-by-instruction. When one input unit of the sequence program data enters the buffer BFR, a discriminator DIC discriminates the operation code WRT and goes to the memory MEM to read out the relay identification which follows the operation code WRT, the identification being delivered to a comparator COM. The latter compares the relay identification "CRA" with the relay identification output of the discriminator DIC and sends the result of the comparison to the controller CNT. If the relay identification from the register RG and the relay identification from the discriminator DIC do not agree, then the controller CNT requests a transfer of the next input unit of sequence program data and the foregoing operations are repeated. When agreement is detected by the comparator COM, the controller CNT causes a picture converter ITU to convert the unit of sequence program data stored in the buffer register BFR into picture information, this information then being stored in the refresh memory RFM. The character generator CG generates a picture based on the picture information stored in the refresh memory RFM and the picture is stored in the picture memory IMM and displayed on the cathode ray tube CRT. Thus, as shown in Fig. 12, the cathode ray tube will display only the ladder segments in which the relay identified by "CRA" is to be turned on.

In accordance with the present embodiment of the invention described and illustrated hereinabove, entering the identification of a desired relay or the memory address storing the state of the desired relay presents only a display of a ladder diagram segment that indicates the conditions for turning on the relay. This facilitates debugging and maintenance operations to a marked degree.

As many apparently widely different embodiments of the present invention can be made without departing from the spirit and scope thereof, it is to be understood that the invention is not limited to the specific embodiments thereof except as defined in the appended claims.

There has been disclosed a method and an apparatus for displaying a ladder diagram in a numerical control system having a programmable sequence control function in which sequence processing is executed based on a sequence program to deliver commands from a numerical control device to a machine and signals from the machine to the numerical control device. A display unit (CRT) displays the sequence program in ladder diagram form made up of at least relays. The identification of a relay (CRA) of interest or the memory address storing the state of the relay (CRA) is entered, an item of sequence data indicating the conditions which turn the relay on is selected, and a ladder diagram segment indicative of said conditions is displayed on the basis of the sequence data.

## Claims

1. A method of displaying a ladder diagram in a numerical control system having a programmable sequence control function in which sequence processing is executed based on a sequence program to deliver commands from numerical control means to a machine and signals from the machine to the numerical control means, the sequence program being displayed on a display unit in the form of a ladder diagram comprising at least relays, said method being characterised by the steps of:

(a) entering data specifying a predetermined relay, said data being a relay identification symbol or a memory address storing a logical state of said relay,

(b) retrieving a sequence program instruction corresponding to a sequence for turning on the relay specified by said data; and

(c) displaying, in ladder diagram form, a sequence for turning on said relay, based on said sequence program instruction.

2. The method according to claim 1, in which one unit of sequence program instructions is constituted by at least one operational instruction and a write instruction for writing the result of an operation.

3. The method according to claim 1 or 2, in which step (b) comprises retrieving a unit of sequence program instructions whenever a relay identification symbol, constituting an operand of a write instruction in the sequence program instructions, agrees with the relay specified by the entered data.

4. An apparatus for displaying a ladder diagram in a numerical control system having a programmable sequence control function, operable to execute sequence processing based on a sequence program to deliver commands from numerical control means to a machine and signals from the machine to the numerical control means, the sequence being displayed on a display unit in the form of a ladder diagram comprising at least relays, said apparatus being characterised by:

(a) input means for entering data specifying a predetermined relay, said data being a relay identification symbol or a memory address storing a logical state of said relay;

(b) retrieval means for retrieving a sequence program instruction corresponding to a sequence for turning on the relay specified by said data; and

(c) display means for displaying, in ladder diagram form, a sequence for turning on said relay, based on said sequence program instruction.

5. The apparatus according to claim 4, in which the sequence program instruction is constituted by an operational instruction and a write instruction for writing the result of an operation.

6. The apparatus according to claim 4 or 5, in which said retrieval means includes comparison means for discriminating whether a relay identification symbol, constituting an operand of a write instruction in one unit of sequence program instructions, agrees with the relay specified by the entered data.

7. The apparatus according to claim 6, in which said retrieval means includes:

conversion means for converting, into a relay identification symbol, an operand of a write instruction in one unit of sequence program data, and

comparison means for comparing the relay identification symbol from said conversion means with the relay specified by the entered data.

8. The apparatus according to claims 4 to 7, in which said display means comprises:

means for converting, into picture information, a sequence program instruction retrieved by said retrieval means;

character generating means storing patterns and characters necessary to display a ladder diagram, for generating a picture of a ladder diagram based on the picture information received from the converting means;

picture memory means for storing the picture of the ladder diagram generated by said character generating means; and

a cathode ray tube for displaying the picture of the ladder diagram stored in said picture memory means.

## Patentansprüche

1. Verfahren zum Anzeigen eines Leiterdiagramms in einem numerischen Steuersystem, das eine programmierbare Folge-Steuerfunktion hat, in welcher Folge eine Verarbeitung auf der Grundlage eines Folge-Programms ausgeführt wird, um Befehle von einem numerischen Steuermittel an eine Maschine und Signale von der Maschine an das numerische Steuermittel zu liefern, welches Folge-Programm in Form eines Leiterdiagramms, das zumindest Relaisfunktionen umfaßt, mittels einer Anzeigeeinheit angezeigt wird, gekennzeichnet durch Schritte zum

(a) Eingeben von Daten, die ein vorbestimmtes Relais kennzeichnen, wobei die Daten ein Relaiskennungssymbol oder eine Speicheradresse, unter der ein logischer Zustand des Relais gespeichert wird, bestimmen,

(b) Abrufen eines Folge-Programmbefehls, der einer Folge zum Einschalten des Relais entspricht, das durch die Daten bestimmt ist, und

(c) Anzeigen in Form eines Leiterdiagrammseiner Folge zum Einschalten des Relais auf der Grundlage des Folge-Programmbefehls.

2. Verfahren nach Anspruch 1, bei dem eine Einheit der Folge-Programmbefehle durch zumindest einen Operationsbefehl und einen Schreibbefehl zum Einschreiben des Ergebnisses einer Operation gebildet ist.

3. Verfahren nach Anspruch 1 oder 2, bei dem Schritt (b) umfaßt: das Abrufen einer Einheit der Folge-Programmbefehle, jedesmal dann, wenn ein Relais-Kennungssymbol, welches einen Operanden eines Schreibbefehls in den Folge-Programmbefehlen darstellt, mit dem Relais übereinstimmt, das durch die eingegebenen Daten bestimmt ist.

4. Gerät zum Anzeigen eines Leiterdiagramms in einem numerischen Steuersystem, das eine programmierbare Folge-Steuerfunktion hat, welches Gerät betreibbar ist, um eine Folge-Verarbeitung auf der Grundlage eines Folge-Programms auszuführen, um Befehle von einem numerischen Steuermittel an eine Maschine und Signale von der Maschine an das numerische Steuermittel zu liefern, welches Folge-Programm in Form eines Leiterdiagramms, das zumindest Relaisfunktion umfaßt, mittels einer Anzeigeeinheit angeziegt, wird, gekennzeichnet durch

(a) ein Eingabemittel zum Eingeben von Daten, die ein vorbestimmtes Relais kennzeichnen, wobei die Daten ein Relaiskennungssymbol oder eine Speicheraddresse bestimmen, unter welcher ein logischer Zustand des Relais gespeichert wird,

(b) ein Abrufmittel zum Abrufen eines Folge-Programmbefehls, der einer Folge für das Einschalten des Relais entspricht, welches durch die Daten bestimmt ist, und

(c) ein Anzeigemittel zum Anzeigen in Form eines Leiterdiagramms einer Folge zum Einschalten des Relais auf der Grundlages des Folge-Programmbefehls.

5. Gerät nach Anspruch 4, bei dem der Folge-Programmbefehl durch einen Operationsbefehl und einen Schreibbefehl zum Einschreiben des Ergebnisses einer Operation gebildet ist.

6. Gerät nach Anspruch 4 oder 5, bei dem das Abrufmittel ein Vergleichsmittel zum Unterscheiden, ob ein Relais-Kennungssymbol, das einen Operanden eines Schreibbefehls in einer Einheit von Folge-Programmbefehlen darstellt, mit dem Relais übereinstimmt, welches durch die eingegebenen Daten bestimmt ist.

7. Gerät nach Anspruch 6, bei dem das Abrufmittel enthält;

ein Umsetzmittel zum Umsetzen eines Operanden eines Schreibbefehls in einer Einheit von Folge-Programmdaten in ein Relais-Kennungssymbol und

ein Vergleichsmittel zum Vergleichen des Relais-Kennungssymbols aus dem Umsetzmittel mit dem Relais, welches durch die eingegebenen Daten bestimmt ist.

8. Gerät nach einem der Ansprüche 4 bis 7, bei dem das Anzeigemittel umfaßt:

ein Mittel zum Umsetzen eines Folge-Programmbefehls, der durch das Abrufmittel abgerufen ist, in Bildinformation,

ein Zeichenerzeugsmittel, das Muster und Zeichen speichert, die notwending sind, um ein Leiterdiagramm anzeigen zu können, zum Erzeugen eines Bilds eines Leiterdiagramms auf der Grundlage der Bildinformation, die von dem Umsetzmittel empfangen ist,

ein Bildspeichermittel zum Speichern des Bilds des Leiterdiagramms, welches Bild durch das Zeichenerzeugungsmittel erzeugt ist, und

eine Katodenstrahlröhre zum Anzeigen des Bilds des Leiterdiagramms, welches in dem Bildspeicher gespeichert ist.

**Revendications**

1. Méthode pour afficher un diagramme en échelle dans un système de commande numérique comprenant une fonction de commande de séquence programmable, dans laquelle le traitement séquentiel est exécuté sur la base d'un programme de séquence pour fournir des commandes à partir de moyens de commande numérique à une machine et des signaux de la machine aux moyens de commande numériques, le programme de séquence étant affiché sur une unité d'affichage sous forme d'un diagramme en échelle comprenant au moins dès relais, ladite méthode étant caractérisée par les étapes consistant à:

(a) entrer la donnée spécifiant un relais prédéterminé, ladite donnée étant un symbole d'identification de relais ou une addresse de mémoire stockant un étant logique dudit relais;

(b) récupérer une instruction du programme de séquence correspondant à une séquence pour exciter le relais spécifié par ladite donnée et;

(c) afficher sous former d'un diagramme en échelle une séquence pour exciter ledit relais, sur la base de ladite instruction du programme de séquence.

2. Méthode selon la revendication 1, dans laquelle une unité d'instructions de programme de séquence est constituée par au moins une instruction d'opération et une instruction d'écriture pour écrire le résultat d'une opération.

3. Méthode selon la revendication 1 ou 2, dans laquelle l'étape (b) comprend le récupération d'une unité d'instructions de programme de séquence chaque fois qu'un symbole d'identification de relais, constituant une opérande d'une instruction d'écriture dans l'instruction de programme de séquence, concorde avec le relais spécifié par l'entrée donnée.

4. Dispositif pour afficher un diagramme en échelle dans un système de commande numérique comprenant une fonction de commande de séquence programmable, apte à exécuter le traitement séquentiel sur la base d'un programme de séquence pour fournir des instructions provenant de moyens de commande numériques à une machine et des signaux provenant de la machine aux moyens de commande numériques, le programme de séquence étant affiché sur une unité d'affichage sous la forme d'un diagramme en échelle comprenant au moins des relais, ledit dispositif étant caractérisé par:

(a) des moyens d'entrée pour entrer la donnée spécifiant un relais prédéterminé, ladite donnée étant un symbole d'identification de relais ou une addresse de mémoire stockant un étant logique dudit relais;

(b) des moyens de récupération pour récupérer une instruction de programme de séquence correspondant à une séquence pour exciter le relais spécifié par ladite donnée; et

(c) des moyens d'affichage pour afficher sous la forme d'un diagramme en échelle une séquence pour exciter ledit relais, sur la base de l'instruction de programme de séquence.

5. Dispositif selon la revendication 4, dans lequel l'instruction de programme de séquence est constituée par une instruction d'opération d'écriture pour écrire le résultat d'une opération.

6. Dispositif selon la revendication 4 ou 5, dans lequel lesdits moyens de récupération comprennent des moyens de comparaison pour effectuer une discrimination et savoir si un symbole d'identification de relais, constituant une opérande d'une instruction d'écriture dans une unité d'instructions de programme de séquence, concorde avec le relais spécifié par la donnée entrée.

7. Dispositif selon la revendication 6, dans lequel lesdits moyens de récupération comprennent:

des moyens pour convertir en information d'image une instruction du programme de séquence récupérée par lesdits moyens de récupération;

des moyens de comparaison pour comparer le symbole d'identification de relais provenant desdits moyens d'identification avec le relais spécifié par la donnée entrée.

8. Dispositif selon l'une quelconque des revendications 4 à 7, caractérisé en ce que lesdits moyens d'affichage comprennent:

des moyens pour convertir en information d'image une instruction de programme de séquence récupérée par lesdits moyens de récupération;

des moyens der génération de caractères stockant les motifs et les caractères nécessaires à l'affichage d'un diagramme en échelle, pour générer une image d'un diagramme en échelle basée sur l'information d'image reçue des moyens de conversion;

des moyens à mémoire d'image pour stocker l'image d'un diagramme en échelle généré par lesdits moyens de génération de caractères; et

un tube à rayon cathodique pour afficher l'image du diagramme en échelle dans lesdits moyens à mémoire d'image.

# Fig. 1

EP 0 089 194 B1

# Fig. 2

| MF | M28 | M24 | M22 | M21 | M18 | M14 | M12 | M11 | | |
|----|-----|-----|-----|-----|-----|-----|-----|-----|---|---|
| 66.1 | 67.8 | 67.7 | 67.6 | 67.5 | 67.4 | 67.3 | 67.2 | 67.1 | (M03) 10.2 | M03 |

| AUT | M03 | SPCCW | | |
|-----|-----|-------|---|---|
| 10.1 | 10.2 | 10.3 | (SPCW) 20.5 | |

| HSM | READY | CRM | |
|-----|-------|-----|---|
| 11.1 | 20.1 | 20.2 | (CRA) 42.2 |

| J.M |
|-----|
| 11.2 |

| MAN |
|-----|
| 11.3 |

# Fig. 3

| Operation Code | Operand | |
|----------------|---------|---|
| RD | MF | |
| AND.NOT | M 28 | |
| AND.NOT | M 24 | |
| AND.NOT | M 22 | |
| AND.NOT | M 21 | ① |
| AND.NOT | M 18 | |
| AND.NOT | M 14 | |
| AND | M 12 | |
| AND | M 11 | |
| WRT | M 03 | |
| RD | AUT | |
| AND | M 03 | ② |
| AND.NOT | SPCCW | |
| WRT | SPCW | |
| RD | HS·M | |
| OR | J·M | |
| OR | MAN | |
| AND | READY | |
| AND.NOT | CRH | |
| WRT | CRA | |

# Fig. 4

| Symbol | Data Memory Address and Bit | Symbol | Data Memory Address and Bit. |
|--------|------------------------------|--------|------------------------------|
| AUT | 10.1 | MF | 66.1 |
| M 03 | 10.2 | M 28 | 67.8 |
| SPCCW | 10.3 | M 24 | 67.7 |
| SPCW | 20.5 | M 22 | 67.6 |
| | | M 21 | 67.5 |
| | | M 18 | 67.4 |
| HS.M | 11.1 | M 14 | 67.3 |
| J.M | 11.2 | M 12 | 67.2 |
| MAN | 11.3 | M 11 | 67.1 |
| READY | 20.1 | | |
| CRH | 20.2 | | |
| CRA | 42.2 | | |

2

# Fig. 5

202h

DI

Gl

G2

Gn

DEC1

CBUS ABUS DBUS

DO

Data Input/Output Unit

202d

$l_{11}$ RC1

$l_{12}$ RC2

$l_{1n}$ RCn

$l_{21}$ RY1

$l_{22}$ RY2

$l_{2m}$ RYm

DEC2

Machine Tool

3

Fig. 6

Machine Tool

3

202

202f
202e ROM
202c RAM
202a Data Memory
CPU 202f
202h
202d
202g

NC
101d CPU
101c ROM
101b RAM
101a' Tape Reader
101i MDI
101h Display
101i
101g
101e
101f
101a
Xp,Yp
Xo,Yo
F

4

## Fig. 9

(a) (b) (c) (d) (e) (f) (g)

(h) (i) (j) (k) (ℓ) (m)

## Fig. 10

| Identification | MF | M28 | MO3 |
|---|---|---|---|
| Symbol | ⊣⊢ | ⊣/⊢ | ○ |
| Address | 66.1 | 67.8 | 10.2 |

## Fig. 7

CPU 101d
101c ROM 101a
ROM 101'a
RAM 101b
Tape Reader 101h
ROM 101k
MDI 101i
202d 101g
101f
Display 101l
Xo,Yo
Xp,Xp
F
101a

NC

Machine Tool 3

# Fig. 8

Data Processor — 301m

301b — RAM

301c — ROM

301d — ROM

301e — Data Memory

301a — Paper Tape

301a' — Tape Reader

301f — Table

301g — MDI

301l — Data Input/Output Unit

301n — Xo,Yo — Pulse Distributor — Xp,Yp

F

301j

301h

Refresh Memory — RFM

IMM

DDV

CRT

Display Controller — DPC

Picture Memory

Drive

Memory — MEM

Character Generator — CG

Universal Display Unit

Machine Tool — 3

EP 0 089 194 B1

# Fig. 11

# Fig. 12